# EUROPEAN PATENT APPLICATION

(11) **EP 3 038 082 A1**
(43) Date of publication of application: **29.06.2016**
(21) Application number: 14307134.8
(22) Date of filing: 22.12.2014
(51) Int. Cl.: G09G 3/20, G06F 3/044

(54) **Communication system between a first electronic device and a second electronic device using a capactive touch screen**

(71) Applicant: GEMALTO SA, 92190 Meudon (FR)
(72) Inventor: Mallet, Chrystele, 92190 Meudon (FR); Boulard, Laurent, 92190 Meudon (FR); Normend, Yoan, 92190 Meudon (FR)
(74) Representative: Cassagne, Philippe M.J.

(57) **Abstract**

The present invention relates to a communication system (SYS) between a first electronic device (E1) and a second electronic device (E2), wherein said communication system (SYS) comprises:
- said first electronic device (E1) which comprises a photo-sensor (Ps) and a capacitive module (Cm) and which is adapted to:
- perform a first calibration (C1) of a light sequence (Ls) emitted by said second electronic device (E2) by means of a capacitive touch screen (Cts), said first calibration (C1) being based on the reception by means of said photo-sensor (Ps) of said light sequence (Ls) at decreasing transmission rates (R1i) ;
- perform a second calibration (C2) of a time duration (T2) between:
- a state change (St) of said capacitive module (Cm); and
- the knowledge by said first electronic device (E1) that said second electronic device (E2) has detected said state change (St);

- said second electronic device (E2) which comprises said capacitive touch screen (Cts) and which is adapted to perform by means of said capacitive touch screen (Cts) a third calibration (C3) of two reference time intervals (It0, It1) of a capacitive state changes sequence pattern (Sq3'), said third calibration (C3) being based on the reception by said second electronic device (E2) of an event sequence (Sq3) corresponding to said capacitive state changes sequence pattern (Sq3') which is sent by said first electronic device (E1) at increasing transmission rates (R3i).

## Description

### TECHNICAL FIELD

The present invention relates to a communication system between a first electronic device and a second electronic device. It also relates to an associated communication method.

Such communication system may be used in a non-limitative example for any communication using a light modulation and touch capacitive to exchange data between a first electronic device and a second electronic device

### BACKGROUND OF THE INVENTION

A communication system comprising a first electronic device and a second electronic device, which is known by the man skilled in the art, permits the first electronic device to transmit data to the second electronic device through a touch screen of said second electronic device. The first electronic device comprises a capacitive module which permits to emulate the presence or the absence of a finger on the screen of said second electronic device. According to the capacitive state at the surface of the touch screen, an event is raised at the second electronic device when a state change of said capacitive module is detected. According to the time between two consecutives events, the second electronic device distinguishes different values such as a value "0" and a value "1". The sequence of the different values received forms a data sequence to be transmitted.

One problem of this prior art is that this communication system is not reliable as the second electronic device may not be able to accurately give a timestamp to events and thus distinguish a value "0" from a value "1", because of the touch screen capacities which are not efficient enough, or because of software overlay in the second electronic device which may modify the time reception of an event.
Another communication system comprising a first electronic device and a second electronic device, which is known by the man skilled in the art, permits the first electronic device to transmit light sequences to the second electronic device through a light modulation based communication. The first electronic device comprises a light emitter to transmit light sequences to the second electronic device. The second electronic device comprises a photo-sensor for capturing said light sequences.

One problem of this prior art is that this communication system is not reliable as the first electronic device may not be able to accurately emit a light sequences according to a defined transmission rate because of software overlay in said first electronic device.

### SUMMARY OF THE INVENTION

It is an object of the invention to provide a communication system between a first electronic device and a second electronic device, which permits an efficient and reliable bi-directional capacitive and light communication between two electronic devices.

To this end, there is provided a communication system between a first electronic device and a second electronic device, wherein said communication system comprises :
- said first electronic device which comprises a photo-sensor and a capacitive module and which is adapted to:
   - perform a first calibration of a light sequence emitted by said second electronic device by means of a capacitive touch screen, said first calibration being based on the reception by means of said photo-sensor of said light sequence at decreasing transmission rates;
   - perform a second calibration of a time duration between:
      - a state change of said capacitive module; and
      - the knowledge by said first electronic device that said second electronic device has detected said state change;
- said second electronic device which comprises said capacitive touch screen and which is adapted to perform by means of said capacitive touch screen a third calibration of two reference time intervals of a capacitive state changes sequence pattern, said third calibration being based on the reception by said second electronic device of an event sequence corresponding to said capacitive state changes sequence pattern which is sent by said first electronic device at increasing transmission rates.

As we will see in further details, the communication system permits to improve a light communication between said first and the second electronic devices thanks to the first calibration, and to improve a capacitive communication between said first and the second electronic devices thanks to the second and third calibrations.

In addition, there is provided a first electronic device adapted to communicate with a second electronic device, wherein said first electronic device comprises a photo-sensor and a capacitive module and is adapted to:
- perform a first calibration of a light sequence emitted by said second electronic device by means of a capacitive touch screen, said light sequence calibration being based on the reception by means of said photo-sensor of said light sequence at decreasing transmission rates;
- perform a second calibration of a time duration between:
   - a state change between a touch and a touch release by means of said capacitive module; and
   - the knowledge by said first electronic device that said second electronic device has detected said state change.

In addition, there is provided a second electronic device adapted to communicate with a first electronic device, **wherein** said second electronic device comprises said capacitive touch screen and which is adapted to perform by means of said capacitive touch screen a third calibration of two reference time intervals of a capacitive state changes sequence pattern, said third calibration being based on the reception by said second electronic device of an event sequence corresponding to said capacitive state changes sequence pattern which is sent by said first electronic device at increasing transmission rates.

According to non-limitative embodiments of the invention, the communication system, the first electronic device, the second electronic device, in accordance with the invention further comprises the following characteristics.

In a non-limitative embodiment, said third calibration is performed after said second calibration.

In a non-limitative embodiment, for said third calibration, said second electronic device is further adapted to:
- measure the time intervals between consecutive events of said event sequence;
- compare each time interval measured with the two reference time intervals, whose values depend on said transmission rate;
- recover a sequence of first and second data from said comparison;
- compare said sequence of first and second data with a sequence of data pattern issued from said capacitive state change pattern.

In a non-limitative embodiment,
- said first electronic device is adapted to :
   - for said first calibration, send by means of said capacitive module a first acknowledgment information when recognizing said light sequence;
   - for said second calibration, receive by means of said photo-sensor a second acknowledgment information from said second electronic device when said second electronic device has received an event corresponding to a state change of said capacitive module;
   - for said third calibration, emit by means of said capacitive module at increasing transmission rates a capacitive state change sequence pattern corresponding to said event sequence received by said second electronic device as long as a third acknowledgment information is sent by said second electronic device;
- said second electronic device is adapted to :
   - for said first calibration, stop the emission of said light sequence after receiving an event corresponding to a first acknowledgment information sent by said first electronic device;
   - for said second calibration, send by means of said capacitive touch screen a second acknowledgement information when receiving an event corresponding to a state change of said capacitive module;
   - for said third calibration, send by means of said capacitive touch screen a third acknowledgment information when recognizing said event sequence.

In a non-limitative embodiment, said first electronic device is adapted to:
- for said second calibration, repeat by means of said capacitive module a state change.

In a non-limitative embodiment, for said third calibration, said first electronic device is adapted to repeat by means of said capacitive module the emission of a capacitive state change sequence pattern corresponding to said event sequence received by said second electronic device at a transmission rate from which a last third acknowledgment information was sent by said second electronic device.

In a non-limitative embodiment, said first electronic device and said second electronic device are adapted to perform a bi-directional capacitive and light communication after termination of said first calibration, said second calibration and said third calibration.

In a non-limitative embodiment, a first reference time interval which is the shortest corresponds to a first type of data in said sequence of data pattern, and a second reference time interval which is the longest corresponds to a second type of data in a sequence of data pattern.

In a non-limitative embodiment, said first type of data is a value equal to 1 and said second type of data is a value equal to 0.

In a non-limitative embodiment, said second electronic device is a mobile phone, a tablet, a phablet, a pc computer, or a laptop, or a portable electronic device equipped with a capacitive touch screen.

In a non-limitative embodiment, said first electronic device is a portable electronic device.

In a non-limitative embodiment, said capacitive touch screen comprises a light emitter and capacitive sensors.

In addition, there is provided a communication method between a first electronic device and a second electronic device, wherein said communication method comprises:
- performing by means of said first electronic device a first calibration of a light sequence emitted by said second electronic device by means of a capacitive touch screen, said first calibration being based on the reception by means of said photo-sensor of said light sequence at decreasing transmission rates;
- performing by means of said first electronic device a second calibration of a time duration between:
   - a state change of said capacitive module; and
   - the knowledge by said first electronic device that said second electronic device has detected said state change;
- performing by means of said second electronic device a third calibration of two reference time intervals of a capacitive state changes sequence pattern, said third calibration being based on the reception by said second electronic device of an event sequence corresponding to said capacitive state changes sequence pattern which is sent by said first electronic device at increasing transmission rates.

### BRIEF DESCRIPTION OF THE FIGURES

Some embodiments of methods and/or apparatus in accordance with embodiments of the present invention are now described, by way of example only, and with reference to the accompanying drawings, in which:
- Fig. 1 illustrates schematically a non-limitative embodiment of the communication system between a first electronic device and a second electronic device according to the invention;
- Fig. 2 illustrates schematically the system of Fig. 1 and the functionalities of the different elements of said communication system;

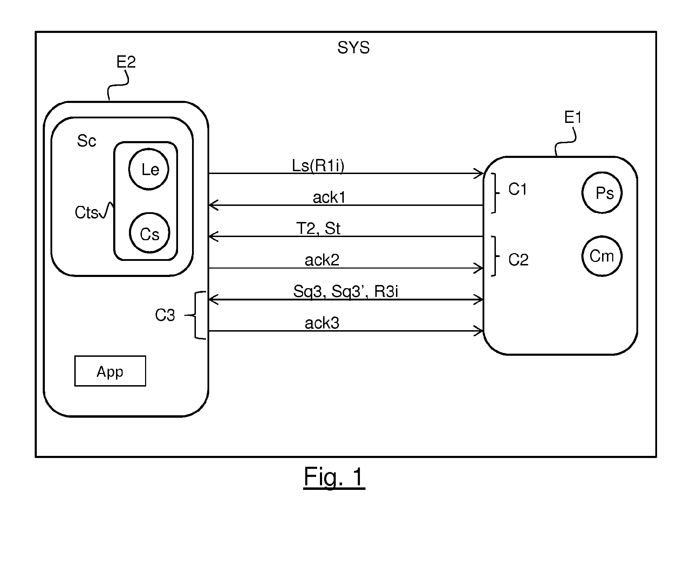

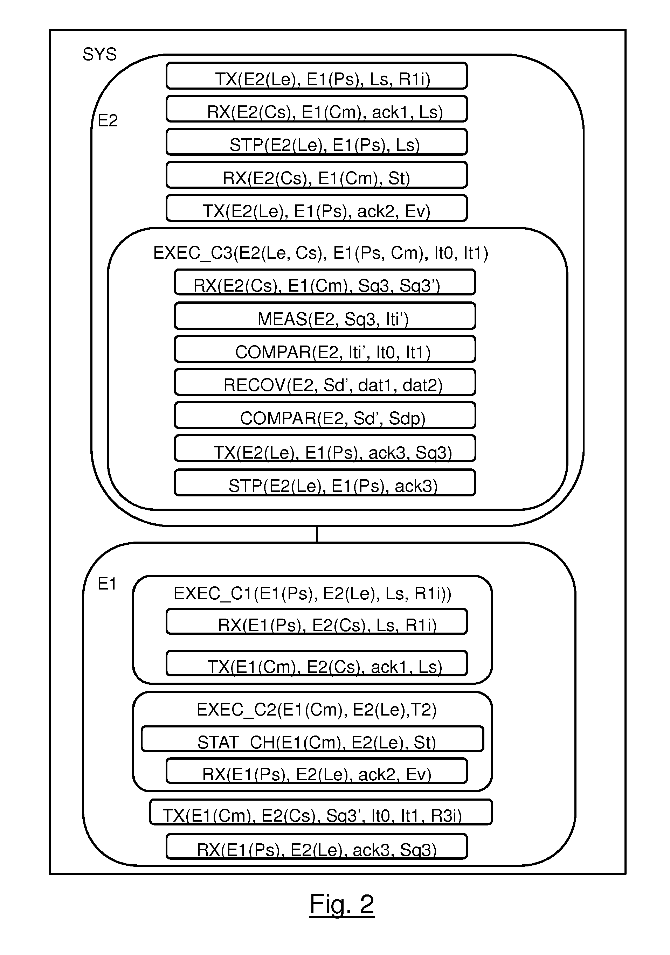

- Fig. 2 is a timing diagram illustrating the first calibration performed by the first electronic device of the communication system of Fig. 1;

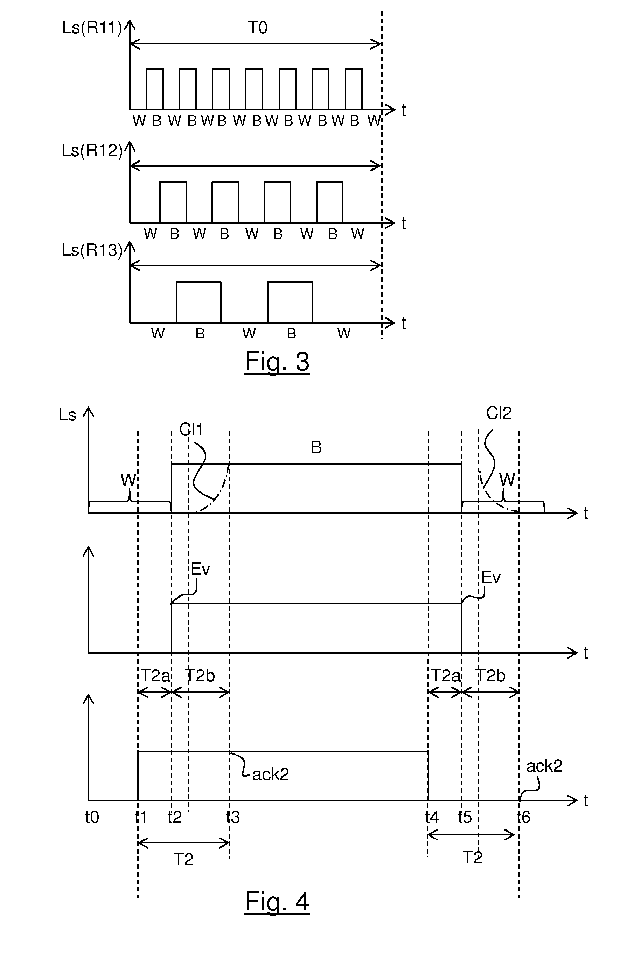

- Fig. 4 is a timing diagram illustrating the second calibration performed by the first electronic device of the communication system of Fig. 1;

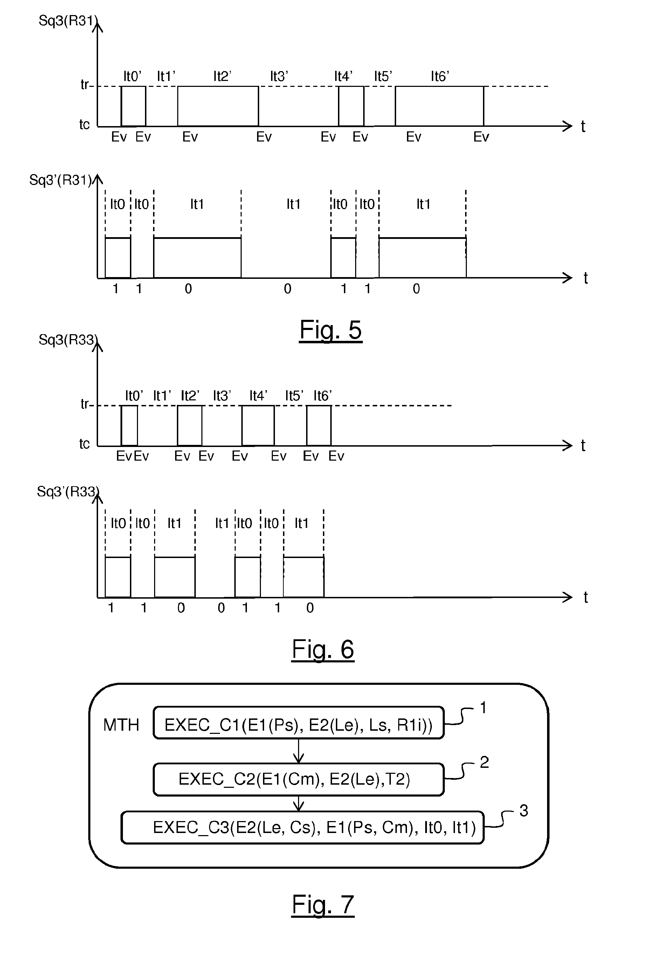

- Fig. 5 is a first timing diagram illustrating the third calibration performed by the second electronic device of the communication system of Fig. 1;
- Fig. 6 is a second timing diagram illustrating the third calibration performed by the second electronic device of the communication system of Fig. 1; and
- Fig. 7 is a schematic organization chart of the communication method which is carried out by the communication system of Fig. 1.

### DESCRIPTION OF EMBODIMENTS OF THE INVENTION

In the following description, well-known functions or constructions by the man skilled in the art are not described in detail since they would obscure the invention in unnecessary detail.

The present invention relates to a communication system SYS between a first electronic device E1 and a second electronic device E2 which are adapted to perform a bi-directional capacitive and light communication. Said communication system SYS is illustrated in Fig. 1 and the different functionalities of its different components are illustrated in Fig. 2.

As illustrated in Fig. 1, the system SYS comprises:
- said first electronic device E1 comprising a photo-sensor Ps and a capacitive module Cm;
- said second electronic device E2 comprising a capacitive touch screen Cts with a light emitter Le and with capacitive sensors Cs.

In a non-limitative embodiment, the first electronic device E1 is a portable device. In a non-limitative variant, said first electronic device E1 comprises no screen.
In non-limitative embodiments, the second electronic device E2 is a mobile phone, a tablet, a phablet, a pc computer, or a laptop. Hence, the second electronic device E2 may be a portable device or not.
In a non-limitative embodiment, the light emitter Le is a display comprising a plurality of Light Emitting Diode component. In non-limitative variants, a light emitting diode component is a LED (« Light Emitting Diode »), an OLED (« organic LED »), an AMOLED (Active-Matrix-Organic LED), or a FOLED (Flexible OLED). In another non-limitative embodiment, the light emitter Le is a LCD display.

In a non-limitative variant, the second electronic device E2 further comprises a screen Sc.

In a non-limitative embodiment, the first electronic device E1 and the second electronic device E2 are Bluetooth Low Energy™ (BLE) devices. It means that they may exchange data by means of a BLE communication protocol.

The first electronic device E1 and the second electronic device E2 are described in details in the following.

The first electronic device E1 is described with reference to the figures 1 to 4.
The first electronic device E1 comprises:
- a photo-sensor Ps; and
- a capacitive module Cm.

The photo-sensor Ps, which permits to capture the light, provides an output which is a function of the power of the light that is detected. The value of said output is function of the intensity of the light received by the photo-sensor Ps.
The first electronic device E1 measures the electric pulses of its photo-sensor Ps which vary according to the light received comprising white and black light levels W, B.
The capacitive module Cm permits to emulate the presence or the absence of a finger at the surface of a screen, here the screen of the second electronic device E2. When the capacitive module Cm is enabled, it emulates the presence of a finger, and when it is disabled, it emulates the absence of a finger.

The second electronic device E2 is described with reference to the figures 1 to 5.

The second electronic device E2 comprises a capacitive touch screen Cts. Said capacitive touch screen Cts comprises:
- a light emitter Le adapted to emit light sequences Ls comprising white W and black B values;
- capacitive sensors Cs adapted to detect a capacitive state change St of the capacitive module Cm of said first electronic device E1.

According to the capacitive touch state at the surface of the touch screen, an event Ev is raised (by a unit processor of E2) at the second electronic device E2, which corresponds to the detection of a capacitive state change St of the capacitive module Cm of the first electronic device E1.
An event Ev is either a touch event (when said capacitive module Cm goes from the state disabled to the state enabled), or a touch release event (when said capacitive module Cm goes from the state disabled to the state enabled).
When the capacitive state of the first electronic device E1 changes from disabled to enabled, the event Ev receives by the second electronic device E2 is a touch tc. When the capacitive state of the first electronic device E1 changes from enabled to disabled, the event Ev receives by the second electronic device E2 is a touch release tr.
According to the time between two consecutives events, the second electronic device E2 distinguishes different values such as a value "0" and a value "1".

In a non-limitative embodiment, the second electronic device E2 comprises an application App which enables a calibration stage comprising a first, second and third calibrations to be performed. Therefore, a user of the second electronic device E2 will launch said application App in order to calibrate his second electronic device E2 and the first electronic device E1. The first, second and third calibration C1, C2 and C3 are performed only once for a pair of second electronic device E2 and first electronic device E1.

The non-limitative example of a mobile phone for the second electronic device E2 and of the portable device for the first electronic device E1 will be taken in the following.

Hence, in order to communicate with said mobile phone E2, the portable device E1 is adapted to:
- perform a first calibration C1 of a light sequence Ls emitted by said second electronic device E2 by means of a capacitive touch screen Cts (and more particularly by means of a light emitter Le), said light first calibration C1 being based on the reception by means of said photo-sensor Ps of said light sequence Ls at decreasing transmission rates R1i (illustrated in Fig. 2 EXEC_C1 (E1 (Ps), E2(Le), Ls, R1i)) ;
- perform a second calibration C2 of a time duration T2 (illustrated in Fig. 2 EXEC_C2(E1 (Cm), E2(Le), T2) between:
   - a state change St of said capacitive module Cm; and
   - the knowledge by said first electronic device E1 that said second electronic device E2 has detected said state change St.

Hence, in order to communicate with said portable device E1, said mobile phone E2 is adapted to perform by means of said capacitive touch screen Cts a third calibration C3 (illustrated in Fig; 2 EXEC_C3(E2(Le, Cs), E1(Ps, Cm), It0, It1)) of two reference time intervals It0, It1 of a capacitive state changes sequence pattern Sq3', said third calibration C3 being based on the reception by said second electronic device E2 of an event sequence Sq3 corresponding to said capacitive state changes sequence pattern Sq3' which is sent by said first electronic device E1 at increasing transmission rates R3i.

The three calibrations C1, C2 and C3 are described hereinafter.

The first calibration C1 is described hereinafter in detail with reference to the time diagram of Fig. 3.

The light sequence Ls is a pattern known by the portable device E1 and by the mobile phone E2.
In a non-limitative example, the light sequence Ls transmitted and received by said portable device E1 comprises an alternation of black B and white W values. Of course, other patterns may be used.

The first calibration C1 permits to determine at which transmission rate R1i the mobile phone E2 may transmit a light sequence Ls to the portable device E1 which will be understood by said portable device E1.

To this end, the mobile phone E2 is adapted to emit by means of its light emitter Le a light sequence Ls at decreasing transmission rates R1i (function illustrated in Fig. 2 TX(E2(Le), E1(Ps), Ls, R1 i).
The mobile phone E2 begins to emit a light sequence Ls at a first transmission rate R11, which is a maximum transmission rate which may be supported by said portable device E1.

The portable device E1 receives by means of its photo-sensor Ps from said mobile phone E2 said light sequence Ls at said first transmission rate R11, as illustrated in Fig. 3 (function illustrated in Fig. 2 RX(E1(Ps), E2(Le), Ls, R1 i)).

The first transmission rate R11 is lower than or equal to the screen refresh rate of the mobile phone E2. In a non-limitative example the screen refresh rate is equal to 60Hz.

In a first non-limitative variant, the light sequence Ls is received during a predetermined time T0 which is known by both the portable device E1 and the mobile phone E2. In a non-limitative example, the predetermined time T0 is equal to 100ms.
In second non-limitative variant, the light sequence Ls has a predetermined length which is known by both the portable device E1 and the mobile phone E2.

If the portable device E1 doesn't recognize said light sequence Ls, it means that said first transmission rate R11 is too high for said mobile phone E2 due to a time latency which depends on the software overlay in said mobile phone E2.
In this case, the portable device E1 doesn't send any first acknowledgement information ack1.
Then, said mobile phone E2 emits said light sequence Ls at a lower second transmission rate R12 and said portable device E1 receives again by means of its photo-sensor Ps said light sequence Ls from said mobile phone E2 but this time at said lower second transmission rate R12 (as illustrated in Fig. 3). In a non-limitative example, said second transmission rate R12 is equal to 30Hz.
The light sequence Ls lasts 100ms as in the first reception.
If the portable device E1 doesn't recognize said light sequence Ls, it means that said second transmission rate R12 is too high for said mobile phone E2. Then, said mobile phone E2 emits said light sequence Ls at a lower third transmission rate R13 and said portable device E1 received again by means of its photo-sensor Ps said light sequence Ls from said mobile phone E2 but this time at a lower third transmission rate R13 and so on.
In a non-limitative example, said third transmission rate R13 is equal to 15Hz.
The light sequence Ls lasts 100ms as in the first and second reception.

This reception of the light sequence Ls at decreasing transmission rates R1i is repeated until the portable device E1 recognizes said light sequence Ls. Hence, as long as said mobile phone E2 has not received any event corresponding to a first acknowledgement information ack1 from said portable device E1 (that is to say as long as said portable device E1 doesn't recognize said light sequence Ls), said mobile phone E2 sends said light sequence Ls at decreasing transmission rates R1i.
In a non-limitative embodiment, the next decreasing transmission rate R1i is the previous transmission rate R1 i divided by two.
It is to be noted that in order to recognize said light sequence Ls, the portable device E1 measures the transition times between the white and black values.

When the portable device E1 recognizes the light sequence Ls it has received from the mobile phone E2, it sends by means of its capacitive module Cm a first acknowledgment information ack1 to said mobile phone E2 (function illustrated in Fig. 2 TX(E1(Cm), E2(Cs), ack1, Ls).
It is to be noted that the first acknowledgement information ack1 is a state change St of said capacitive module Cm. Hence, if said capacitive module was enabled when the mobile phone E2 was sending the light sequence Ls, it state is set to a disable state. If said capacitive module was disabled when the mobile phone E2 was sending the light sequence Ls, it state is set to an enable state.
The mobile phone E2 receives by means of its capacitive sensors Cs an event Ev corresponding to a first acknowledgement information ack1 sent by said portable device E1 when this latter has recognized said light sequence Ls (function illustrated in Fig. 2 RX(E2(Cs), E1(Cm), ack1, Ls).
Upon reception of a first acknowledgement information ack1, the mobile phone E2 stops the emission of said light sequence Ls after receiving an event Ev corresponding to said first acknowledgment information ack1 sent by said portable device E1 (function illustrated in Fig. 2 STP(E2(Le), E1(Ps), Ls)).

Hence, after the sending of said first acknowledgment information ack1, the portable device E1 doesn't receive any more any light sequence Ls.

The transmission rate R1i at which the portable device E1 recognizes the light sequence Ls, here R13 in the given example, is stored in a memory by said portable device E1 for the future bi-directional light and capacitive communication with the mobile phone E2.

The first calibration C1 is then finished.

The second calibration C2 is now described hereinafter in detail with reference to the figures 1, 2 and 4.

It is to be noted that the first calibration C1 and the second calibration C2 are independent from each other. Therefore, in non-limitative embodiments, the portable device E1 is adapted to perform the first calibration C1 before the second calibration C2, or the second calibration C2 before the first calibration C1 indifferently.

The aim of the second calibration C2 is to define the time duration T2 between:
- a state change St of the capacitive module Cm of said portable device E1; and
- the knowledge by said portable device E1 that said mobile phone E2 has detected said state change St.

Said portable device E1 knows that said mobile phone E2 has detected said state change when it receives a second acknowledgment information ack2 from said mobile phone E2.

Therefore, said time duration T2 is the addition of two times duration:
- a first time duration T2a (illustrated in Fig. 4) between a state change St of the capacitive module Cm of the portable device E1 and the reception by the mobile phone E2 of the event Ev corresponding to the detection of said state change St; ; and
- a second time duration T2b (illustrated in Fig. 4) for the mobile phone E2 to change its light state in order to emit a second acknowledgement ack2 indicating it has detected the state change St of said capacitive module Cm of said portable device E1.

It is to be noted that the second time duration T2b also comprises the detection time of the second acknowledgement information ack2 by said portable device E1 (which is well-known by the portable device E1 itself).
It is to be noted that a second acknowledgement information ack2 is a state change of light.

To change its light state, the mobile phone E2 switch from one light value, the white one W or the black one B, to the other light value, the black one B or respectively the white one W.
Because of the different capacities of a mobile phone E2, there is a latency which is the second time duration T2b to switch from one light value (W, B) to another light value (B, W), and said latency T2b may be different from one mobile phone E2 to another one.
The different capacities differ according to the screen refresh rate of a mobile phone E2, the software overlay in a mobile phone E2 etc.

Therefore, said second calibration C2 is necessary in order to find the global time duration T2.

As illustrated in the non-limitative example of Fig. 4, the first time duration T2a corresponds to the latency between:
- the time t1 where the portable device E1 changes its capacitive state St; and
- the time t2 where said the mobile phone E2 receives an event E2 (corresponding to a detection of said state change St.
As illustrated in Fig. 4, the second time duration T2b corresponds to the latency between:
- the time t2 where said the mobile phone E2 receives said event Ev; and
- the time t3 where the portable device E1 detects a light change from the mobile phone E2 (that is to say, when it receives the second acknowledgement information ack2).
Indeed, in order to acknowledge the reception of the event Ev, the mobile phone E2 changes its light state so that it may be detected by said portable device E1. But the moment (at t2) where said mobile phone E2 request a light change to the screen and the moment (at t3) where the light state is effectively changed is different. The curve CI1 depicts a slow transition from the white value W to the black value. It is to be noted that this light change begins after time t2 because of software overlay between the request of light change and the effective start of light change by the screen Sc of the mobile phone E2. Hence the curve CI1 is shifted from time t2.
The curve CI2 depicts a slow transition from the black value B to the white value W. The same shift applies to said curve CI2 because of software overlay.

As illustrated in Fig. 4, the first time duration T2a also corresponds to the latency between:
- the time t4 where the portable device E1 changes its capacitive state St; and
- the time t5 where said the mobile phone E2 receives an event E2 (corresponding to a detection of said state change St.
As illustrated in Fig. 4, the second time duration T2b also corresponds to the latency between:
- the time t5 where said the mobile phone E2 receives said event Ev; and
- the time t6 where the portable device E1 detects a light change from the mobile phone E2 (that is to say, when it receives the second acknowledgement information ack2).

Hence, if before the reception of the event E, the light state of the mobile phone E2 was corresponding to a white value W, the second acknowledgement information ack2 will be a black value B (as illustrated in Fig. 4).
If before the reception of the event Ev, the light state of the second electronic device E2 was corresponding to a black value B, the second acknowledgement information ack2 will be a white value W.

Therefore, as illustrated in Fig 4, the reception of the second acknowledgement information ack2 by the portable device E1 sent by the mobile phone E2 is different from the reception by said mobile phone E2 of an event Ev, and is different from the end of the light state change.

Hence, during said second calibration C2, the portable device E1 measures the time duration T2 which is a timeout minimum value between a state change of its capacitive module Cm by itself, and the reception by itself of the second acknowledgement information ack2 from the mobile phone E2.

In order to measure said time duration T2, the portable device E1 is adapted to perform by means of its capacitive module Cm a state change St (function illustrated in Fig. 2 STAT_CH(E1 (Cm), E2(Le), St)

As illustrated in Fig. 4 in a non-limitative example, the state change St (at time t1) corresponds to an event Ev which is received (at time t2) by the mobile phone E2, said event Ev being a touch tc2, and the state change St-(at time t4) corresponds to a second event Ev which is received (at time t3) by the mobile phone E2, said event Ev being a touch release.

Then, the mobile phone E2 is adapted to:
- receive by means of its capacitive sensors Cs said event Ev corresponding to a state change St of the capacitive module Cm of said portable device E1 (function illustrated in Fig. 2 RX(E2(Cs), E1(Cm), St));
- send by means of said light emitter Le a second acknowledgement information ack2 when receiving an event Ev corresponding to said state change St (function illustrated in Fig. 2 TX(E2(Le), E1(Ps), ack2, Ev)).

Hence, only when the mobile phone E2 receives an event Ev, that is to say, when it detects a corresponding capacitive state change St of said portable device E1, said mobile phone E2 sends a second acknowledgment information ack2.

Then, the portable device E1 is adapted to receive by means of its photo-sensor Ps a second acknowledgement information ack2 from said mobile phone E2 (emitted by said light emitter Le) when said mobile phone E2 has received an event Ev corresponding to a detection of a state change of the capacitive module Cm of said portable device E1 (function illustrated in Fig. 2 RX(E1(Ps), E2(Le), ack2, Ev))..

If the portable device E1 doesn't receive any second acknowledgement information ack2 from the mobile phone E2 for the event Ev, it will perform again a state change St until it received said second acknowledgement information ack2.
Hence, until it finds the time duration T2, the portable device E1 is adapted to repeat a state change St.

It is to be noted that the time interval between a state change to another state change, for example the time interval t1-t4, is greater than or equal to the maximum time duration T2 which may be applied for a mobile phone E2. The value of said maximum time duration may be empirically found.

In the Fig. 4 illustrated, the portable device E1 performs two state changes at time t1 and at time t4.

In a non-limitative embodiment, when said portable device E1 has found the time duration T2, in order to be sure of the value of said time duration T2, the portable device E1 is adapted to repeat by means of said capacitive module Cm a state change St as many times as it wants.

Hence, when the portable device E1 has measured the time duration T2, it knows that for the future bi-directional light and capacitive communication with said mobile phone E2, it has to wait a time greater than or equal to said time duration T2 for said mobile phone E2 to respond. Hence, the time duration T2 is the minimum time for a mobile phone E2 to reply to the portable device E1 after receiving an event sequence corresponding to a capacitive state changes sequence sent by said portable device E1.

The second calibration C2 is then finished.

When the first calibration C1 and the second calibration C2 are finished, the third calibration C3 may be performed by the mobile phone E2.

The third calibration C3 is now described hereinafter in detail with reference to the figures 1, 2 and 6.

It is to be noted that for said third calibration C3, the portable electronic device E1 and the mobile phone E2 have in memory a mapping table with different transmission rate R3i and associated different values of a first reference time interval It0 and a second reference time interval It1.

The aim of the third calibration C3 is for the mobile phone E2 to be able to differentiate a first type of data dat1 and a second type of data dat2 sent by the portable device E1 within a capacitive state changes sequence pattern Sq3'.
In a non-limitative embodiment, the first type of data dat1 is a value 1, and the second type of data dat2 is a value 0.

To the capacitive state changes sequence pattern Sq3' at a determined transmission rates R3i corresponds an event sequence Sq3 received by the mobile phone E2.
Each event Ev of said event sequence Sq3 has a timestamp tp. The difference between timestamps tp1, tp2 of consecutive events defined a plurality of different intervals Iti'.

In order to differentiate a value "1" from a value "0", the mobile phone E2 computes from said timestamps tp1 and tp2 the time intervals Iti' between consecutive events Ev of said event sequence Sq3 received.
This computation results in a set ST1' of time intervals Iti' in the event sequence Sq3.
The mobile phone E2 will then compare each time interval Iti' found in the set ST1 with two reference time intervals It0 and It1 (whose values depend on the transmission rate R3i) to find from which reference time interval, a time interval Iti' is the nearest.
These two reference time intervals It0 and It1 correspond respectively to the first type of data dat1 and to the second type of data dat2: they are the time taken by the portable device E1 to send respectively the first data dat1 and the second data dat2. Hence, the values of these two reference time intervals It0 and It1 depend on the transmission rate R3i value. Said first time interval It0 and second time interval It1 are different enough to distinguish between a first type of data dat1 and a second type of data dat2.

The two reference time intervals It0 and It1 are issued from an event sequence pattern Sq3 corresponding to a capacitive state changes sequence pattern Sq3'.
Said capacitive state changes sequence pattern Sq3' comprises a series of state changes St which are separated also by the first or the second reference time intervals It0, It1.

Thanks to this comparison, the mobile phone E2 is able to recover a sequence Sd' of first and second data dat1 and dat2.
Said sequence Sd' of first and second data dat1 and dat2 is then compared with a pattern sequence Sdp of first and second data dat1 and dat2, which is issued from the capacitive state changes sequence pattern Sq3'.
If the sequences of data Sd' and Sdp matched, it means that the mobile phone E2 has differentiated the first type of data dat1 and the second type of data dat 2 sent by the portable device E1 within a capacitive state changes sequence pattern Sq3' and that the transmission rate R3i permits both mobile phone E2 and portable device E1 to communicate with each other.
Then, if said portable device E1 receives an acknowledgement information ack3 from said mobile phone E2, said portable device E1 sends again the capacitive state changes sequence pattern Sq3' to the mobile phone E2, with an increased transmission rate R3i. This leads to change the values of the two reference time intervals It0 and It1.
The mobile phone E2 which receives the corresponding event sequence Sq3, will compare a new set ST1 of time intervals Iti' with the two reference time intervals It0 and It1 and so on until the two sequences of data Sd' and Sdp don't matched.
The last transmission rate found R3i, and therefore the last values of the two reference time intervals It0 and It1, which permit a communication between the mobile phone E2 and the portable device E1 are kept for the future bi-directional communication.

Hence, for said third calibration C3:
The portable device E1 is adapted to:
   - emit by means of its capacitive module Cm the capacitive state changes sequence pattern Sq3' at increasing transmission rates R3i as long as it receives a third acknowledgement information ack3 sent by said mobile phone E2 (function illustrated in Fig. 2 TX(E1(Cm), E2(Cs), Sq3', It0, It1, R3i));
   - receive by means of its photo-sensor Ps a third acknowledgement information ack3 from said mobile phone E2 ((function illustrated in Fig. 2 RX(E1(Ps), E2(Le), ack3, Sq3)).

The mobile phone E2 is adapted to:
- receive by means of its capacitive sensors Cs an event sequence Sq3 corresponding to said capacitive state changes sequence pattern Sq3' sent by said first electronic device E1 RX(E2(Cs), E1 (Cm), Sq3, Sq3'));
- send by means of its light emitter Le a third acknowledgment information ack3 when recognizing said event sequence Sq3 (TX(E2(Le), E1(Ps), ack3, Sq3)).

The calibration C3 is further described with reference to Fig. 5 and Fig. 6.

In Fig. 5 and Fig. 6 the capacitive sequence pattern Sq3' is illustrated. It comprises a sequence of state changes St. A duration between two state changes St is a first reference time interval It0 or a second reference time interval It1.
In a non-limitative embodiment, the first reference time interval It0 which is the shortest corresponds to the first type of data dat1 in the capacitive state changes sequence pattern Sq3', and the second reference time interval It1 which is the longest corresponds to the second type of data dat2 in the capacitive state changes sequence pattern Sq3'.

In the non-limitative example of Fig. 5 and Fig. 6, said capacitive state changes sequence pattern Sq3' comprises an alternation of state changes St with the following reference time intervals (as illustrated in Fig. 5): It0-It0-It1-It1-It0-It0-It1
It corresponds to the sequence of data pattern Sdp 1-1-0-0-1-1-0.

In Fig. 5, the portable device E1 begins a first emission of the capacitive state changes sequence pattern sequence Sq3' at a first low transmission rate R31.
In a non-limitative example, in order to transmit:
- a value 1 at the first reference time interval It0 equal to 30ms ; and
- a value 0 at the second reference time interval It1 equal to 60ms ;
the average reference time interval to transmit a value (1 or 0), is of (30+60)/2 = 45ms.
Therefore, the first transmission rate R31 is equal to 1/45ms.
In a non-limitative example, the sequence of reference time intervals of said capacitive state changes sequence pattern sequence Sq3' is: 30ms-30ms-60ms-60ms-30ms-30ms-60ms.

The mobile phone E2 receives a corresponding event sequence Sq3 illustrated in Fig. 5 comprising events Ev which are separated from one another by time intervals It0' to It6'. Due to the software overlay, this sequence of time intervals is different from the sequence of reference time intervals.

After receiving said event sequence Sq3, the mobile phone E2 is further adapted to:
- measure the time intervals Iti' between consecutive events Ev of said event sequence Sq3 (function illustrated in Fig. 2 MEAS(E2, Sq3, Iti'));
- compare each time interval Iti' measured with the two reference time intervals It0 and It1 of the capacitive state changes pattern Sq3' (function illustrated in Fig. 2 COMPAR(E2, Iti', It0, It1)), whose values depend on said transmission rate R3i;
- recover a sequence Sd' of first and second data dat1 and dat2 from said comparison (function illustrated in Fig. 2 RECOV(E2, Sd', dat1, dat2));
- compare said sequence Sd' of first and second data with a sequence of data pattern Sdp issued from said capacitive state change pattern Sq3' (function illustrated in Fig. 2 COMPAR(E2, Sd', Sdp)).

Hence, the mobile phone E2 measures the time intervals Iti' between the consecutives events Ev.
In a non-limitative example, it measures the following sequence of time intervals
It0'-It1'-It2'-It3'-It4'-It5'-It6', with the following respective values 25ms-32ms-58ms-65ms-35ms-30ms-58ms.

Then, the mobile phone E2 compares each time interval Iti' measured with the two reference intervals It0 and It1 to find from which reference time interval it is the nearest.
In the non-limitative example of Fig. 5:
- the first time interval It0' is nearest to the first reference time interval It0;
- the second time interval It1' is nearest to the first reference time interval It0;
- the third time interval It2' is nearest to the second reference time interval It1;
- the fourth time interval It3' is nearest to the second reference time interval It1;
- the fifth time interval It4' is nearest to the first reference time interval It0;
- the sixth time interval It5' is nearest to the first reference time interval It0; and
- the seventh time interval It6' is nearest to the second reference time interval It1.

Thanks to the comparison, the mobile phone E2 is able to set-up a corresponding sequence of reference time intervals It0, It1 which is the following:
It0-It0-It1-It1-It0-It0-It1
Therefore, thanks to this comparison, the mobile phone E2 is able to recover the following sequence Sd' of first and second data dat1 and dat2: 1-1-0-0-1-1-0.

Then, the mobile phone E2 compares said sequence of first and second data Sd' with the sequence of data pattern Sdp (1-1-0-0-1-1-0).

As in this case, both sequences Sqd1' and Sqd1 matches, the mobile phone E2 sends a third acknowledgement information ack3.
After receiving said third acknowledgement information ack3 from the mobile phone E2, which shows that said mobile phone E2 has recognized said event sequence Sq3 corresponding to said capacitive state changes sequence pattern Sq3', the portable device E1 increases its transmission rate R3i and emits again said capacitive state changes sequence pattern sequence Sq3' at a second transmission rate R32 which is greater than the first transmission rate R31 and waits for another third acknowledgement information ack3 from said mobile phone E2 and so on.
As the two reference time intervals It0 and It1 depend on the transmission rate R3i, the modification of the transmission rate R3i leads to a change of the values of the two reference intervals It0 and It1. These new values are known from the portable electronic device E1 and the mobile phone E2.

In a non-limitative example, in order to transmit:
- a value 1 at the first reference time interval It0 equal to 15ms ; and
- a value 0 at the second reference time interval It1 equal to 30ms ;
the average reference time interval to transmit a value (1 or 0), is of (15+30)/2 = 22,5ms.
Therefore, the second transmission rate R32 is equal to 1/22.5ms.

Hence, as long as the mobile phone E2 recognizes the event sequence Sq3 corresponding to the capacitive state changes sequence pattern Sq3', it sends a third acknowledgment information ack3 and it continues to receive said event sequence Sq3.

The portable device E1 continues the emission of the capacitive state changes sequence pattern sequence Sq3' until said portable device E1 doesn't receive any more any third acknowledge information ack3 from said mobile phone E2.
In this case, it means that the mobile phone E2 has not been able anymore to differentiate enough the time intervals Iti' which elapse between two events.
When it doesn't recognize anymore said event sequence Sq3, said mobile phone E2 is adapted to stop the emission of the third acknowledgment information ack3 (function illustrated in Fig. 2 STP(E2(Le), E1(Ps), ack3)).

This case is illustrated in Fig. 6.

The same sequence of reference time intervals (as illustrated in Fig. 5) is taken in a non-limitative example It0-It0-It1-It1-It0-It0-It1, which corresponds to the sequence of data pattern Sdp described before 1-1-0-0-1-1-0.

The associated values of said sequence of reference time intervals are in a non-limitative example:
7ms-7ms-15ms-15ms-7ms-7ms-15ms.

The mobile phone E2 measures the time intervals Iti' between the consecutives events Ev received within the event sequence Sq3 corresponding to the capacitive state changes sequence pattern Sq3' sent at the transmission rate R33.
In a non-limitative example, it measures the following sequence of time intervals
It0'-It1'-It2'-It3'-It4'-It5'-It6', with the following respective value 5ms-12ms-8ms-14ms-12ms-8ms-9ms.
Then, the mobile phone E2 compares each time interval measured Iti' with the two reference intervals It0 and It1 to find from which reference time interval it is the nearest.
In the non-limitative example of Fig. 6:
- the first time interval It0' is nearest to the first reference time interval It0;
- the second time interval It1' is nearest to the second reference time interval It1;
- the third time interval It2' is nearest to the first reference time interval It0;
- the fourth time interval It3' is nearest to the second reference time interval It1;
- the fifth time interval It4' is nearest to the second reference time interval It1;
- the sixth time interval It5' is nearest to the first reference time interval It0; and
- the seventh time interval It6' is nearest to the first reference time interval It0.

Thanks to the comparison, the mobile phone E2 is able to set-up a corresponding sequence of reference time interval It0, It1 which is the following:
It0-It1-It0-It1-It1-It0-It0
Therefore, thanks to this comparison, the mobile phone E2 is able to recover the following sequence Sd' of first and second data dat1 and dat2: 1-0-1-0-0-1-1.

Then, the mobile phone E2 compares said sequence of first and second data Sd' with the sequence of data pattern Sdp (1-1-0-0-1-1-0).

As in this case, both sequences Sqd1' and Sqd1 don't match, the mobile phone E2 stops sending a third acknowledgement information ack3.
It means that said third transmission rate R33 is too high for the mobile phone E2 to recognize the first data dat1 and the second data dat2.

In this case, in a non-limitative embodiment, said portable device E1 is adapted to repeat the emission of the capacitive state changes sequence pattern Sq3' at the transmission rate R3i, here R32 for example, from which a last third acknowledgment information ack3 was sent by said mobile phone E2.
It will repeat said emission one or more times.
It permits to verify that the capacitive state changes sequence pattern Sq3' and therefore the corresponding event sequence Sq3 has been well recognized by said second electronic device E2.

It is to be noted that as the second acknowledgement information ack2, the third acknowledgement information ack3 is a state change of light.

Hence, with the last event sequence Sq3 recognized, the mobile phone E2 will store in memory the values of the two reference time intervals It0 and It1 corresponding to said second transmission rate R32 for the future bi-directional communication.

It is to be noted that a between two transmission of a capacitive state changes sequence pattern Sq3', the portable device E1 waits a time greater than the time duration T2 found in the second calibration C2.

Hence, the communication system SYS described carries out a communication method MTH (illustrated in Fig. 6) between a first electronic device E1 and a second electronic device E2, said method MTH comprising:
- 1) performing by means of said first electronic device E1 a first calibration C1 of a light sequence Ls emitted by said second electronic device E2 by means of a capacitive touch screen Cts, said first calibration C1 being based on the reception by means of said photo-sensor Ps of said light sequence Ls at decreasing transmission rates R1i;
- 2) performing by means of said first electronic device E1 a second calibration C2 of a time duration T2 between:
   - a state change St of said capacitive module Cm; and
   - the knowledge by said first electronic device E1 that said second electronic device E2 has detected said state change St;
- 3) performing by means of said second electronic device E2 a third calibration C3 of two reference time intervals It0, It1 of a capacitive state changes sequence pattern Sq3', said third calibration C3 being based on the reception by said second electronic device E2 of an event sequence Sq3 corresponding to said capacitive state changes sequence pattern Sq3' which is sent by said first electronic device E1.

Hence, when the calibration application App is launched, the calibration stage comprising three phases C1, C2, C3 begins.
When the calibration stage is successful, the bi-directional light and capacitive communication stage may begin.

It is to be understood that the present invention is not limited to the aforementioned embodiments and variations and modifications may be made without departing from the scope of the invention. In the respect, the following remarks are made.
Hence, in a non-limitative embodiment, the second electronic device E2 may be any device (with or without a screen) comprising a component capable of light modulation.
Hence, in other non-limitative embodiments, the photo-sensor Ps is a photodiode, a photo-transistor, a CCD ("Charged Couple Device"), a photovoltaic cell etc.

## Claims

1. Communication system (SYS) between a first electronic device (E1) and a second electronic device (E2), wherein said communication system (SYS) comprises :
- said first electronic device (E1) which comprises a photo-sensor (Ps) and a capacitive module (Cm) and which is adapted to:
- perform a first calibration (C1) of a light sequence (Ls) emitted by said second electronic device (E2) by means of a capacitive touch screen (Cts), said first calibration (C1) being based on the reception by means of said photo-sensor (Ps) of said light sequence (Ls) at decreasing transmission rates (R1 i) ;
- perform a second calibration (C2) of a time duration (T2) between:
- a state change (St) of said capacitive module (Cm); and
- the knowledge by said first electronic device (E1) that said second electronic device (E2) has detected said state change (St);
- said second electronic device (E2) which comprises said capacitive touch screen (Cts) and which is adapted to perform by means of said capacitive touch screen (Cts) a third calibration (C3) of two reference time intervals (It0, It1) of a capacitive state changes sequence pattern (Sq3'), said third calibration (C3) being based on the reception by said second electronic device (E2) of an event sequence (Sq3) corresponding to said capacitive state changes sequence pattern (Sq3') which is sent by said first electronic device (E1) at increasing transmission rates (R3i).

2. First electronic device (E1) adapted to communicate with a second electronic device (E2), wherein said first electronic device (E1) comprises a photo-sensor (Ps) and a capacitive module (Cm) and is adapted to:
- perform a first calibration (C1) of a light sequence (Ls) emitted by said second electronic device (E2) by means of a capacitive touch screen (Cts), said light sequence calibration (C1) being based on the reception by means of said photo-sensor (Ps) of said light sequence (Ls) at decreasing transmission rates (R1 i);
- perform a second calibration (C2) of a time duration (T2) between:
- a state change between a touch (tc2) and a touch release (tr2) by means of said capacitive module (Cm); and
- the knowledge by said first electronic device (E1) that said second electronic device (E2) has detected said state change.

3. Second electronic device (E2) adapted to communicate with a first electronic device (E1), wherein said second electronic device (E2) comprises a capacitive touch screen (Cts) and is adapted by means of said capacitive touch screen (Cts) to perform a third calibration (C3) of two reference time intervals (It0, It1) of a capacitive state changes sequence pattern (Sq3'), said third calibration (C3) being based on the reception by said second electronic device (E2) of an event sequence (Sq3) corresponding to said capacitive state changes sequence pattern (Sq3') which is sent by said first electronic device (E1) at increasing transmission rates (R3i).

4. Communication system (SYS), or first electronic device (E1), or second electronic device (E2), according to one of the previous claims 1 to 3, wherein said third calibration (C3) is performed after said second calibration (C2).

5. Communication system (SYS), or electronic device (E1), or second electronic device (E2), according to one of the previous claims 1 to 4, wherein for said third calibration (C3), said second electronic device (E2) is further adapted to:
- measure the time intervals (Iti') between consecutive events (Ev) of said event sequence (Sq3);
- compare each time interval (Iti') measured with the two reference time intervals (It0, It1), whose values depend on said transmission rate (R3i);
- recover a sequence (Sd') of first and second data (dat1, dat2) from said comparison;
- compare said sequence (Sd') of first and second data with a sequence of data pattern (Sdp) issued from said capacitive state change pattern (Sq3').

6. Communication system (SYS), or first electronic device (E1), or second electronic device (E2), according to one of the previous claims 1 to 5, wherein :
- said first electronic device (E1) is adapted to:
- for said first calibration (C1), send by means of said capacitive module (Cm) a first acknowledgment information (ack1) when recognizing said light sequence (Ls);
- for said second calibration (C2), receive by means of said photo-sensor (Ps) a second acknowledgment information (ack2) from said second electronic device (E2) when said second electronic device (E2) has received an event (Ev) corresponding to a state change of said capacitive module (Cm);
- for said third calibration (C3), emit by means of said capacitive module (Cm) at increasing transmission rates (R3i) a capacitive state change sequence pattern (Sq3') corresponding to said event sequence (Sq3) received by said second electronic device (E2) as long as a third acknowledgment information (ack3) is sent by said second electronic device (E2);
- said second electronic device (E2) is adapted to:
- for said first calibration (C1), stop the emission of said light sequence (Ls) after receiving an event (Ev) corresponding to a first acknowledgment information (ack1) sent by said first electronic device (E1);
- for said second calibration (C2), send by means of said capacitive touch screen (Cts) a second acknowledgement information (ack2) when receiving an event (Ev) corresponding to a state change of said capacitive module (Cm);
- for said third calibration (C3), send by means of said capacitive touch screen (Cts) a third acknowledgment information (ack3) when recognizing said event sequence (Sq3).

7. Communication system (SYS), or first electronic device (E1), or second electronic device (E2), according to one of the previous claims 1 to 6, wherein said first electronic device (E1) is adapted to:
- for said second calibration (C2), repeat by means of said capacitive module (Cm) a state change (St).

8. Communication system (SYS), or first electronic device (E1), or second electronic device (E2), according to one of the previous claims 1 to 7, wherein for said third calibration (C3), said first electronic device (E1) is adapted to repeat by means of said capacitive module (Cm) the emission of a capacitive state change sequence pattern (Sq3') corresponding to said event sequence (Sq3) received by said second electronic device (E2) at a transmission rate (R3i) from which a last third acknowledgment information (ack3) was sent by said second electronic device (E2).

9. Communication system (SYS), or first electronic device (E1), or second electronic device (E2), according to one of the previous claims 1 to 8, wherein said first electronic device (E1) and said second electronic device (E2) are adapted to perform a bi-directional capacitive and light communication after termination of said first calibration (C1), said second calibration (C2) and said third calibration (C3).

10. Communication system (SYS), or first electronic device (E1), or second electronic device (E2), according to one of the previous claims 5 to 9, wherein a first reference time interval (It0) which is the shortest corresponds to a first type of data (dat1) in said sequence of data pattern (Sdp), and a second reference time interval (It1) which is the longest corresponds to a second type of data (dat2) in a sequence of data pattern (Sdp).

11. Communication system (SYS), or first electronic device (E1), or second electronic device (E2), according to one of the previous claims 5 to 10, wherein said first type of data (dat1) is a value equal to 1 and said second type of data (dat2) is a value equal to 0.

12. Communication system (SYS), or first electronic device (E1), or second electronic device (E2), according to one of the previous claims 1 to 11, wherein said second electronic device (E2) is a mobile phone, a tablet, a phablet, a pc computer, or a laptop, or a portable electronic device equipped with a capacitive touch screen (Cts).

13. Communication system (SYS), or first electronic device (E1), or second electronic device (E2), according to one of the previous claims 1 to 12, wherein said first electronic device (E1) is a portable electronic device.

14. Communication system (SYS), or first electronic device (E1), or second electronic device (E2), according to one of the previous claims 1 to 13, wherein said capacitive touch screen (Cts) comprises a light emitter (Le) and capacitive sensors (Cs).

15. Communication method (MTH) between a first electronic device (E1) and a second electronic device (E2), wherein said communication method (MTH) comprises:
- performing by means of said first electronic device (E1) a first calibration (C1) of a light sequence (Ls) emitted by said second electronic device (E2) by means of a capacitive touch screen (Cts), said first calibration (C1) being based on the reception by means of said photo-sensor (Ps) of said light sequence (Ls) at decreasing transmission rates (R1 i);
- performing by means of said first electronic device (E1) a second calibration (C2) of a time duration (T2) between:
- a state change (St) of said capacitive module (Cm); and
- the knowledge by said first electronic device (E1) that said second electronic device (E2) has detected said state change (St);
- performing by means of said second electronic device (E2) a third calibration (C3) of two reference time intervals (It0, It1) of a capacitive state changes sequence pattern (Sq3'), said third calibration (C3) being based on the reception by said second electronic device (E2) of an event sequence (Sq3) corresponding to said capacitive state changes sequence pattern (Sq3') which is sent by said first electronic device (E1) at increasing transmission rates (R3i).
